# EUROPEAN PATENT SPECIFICATION

(11) **EP 0 575 012 B1**
(45) Date of publication and mention of the grant of the patent: **02.01.1997**
(21) Application number: 93201747.8
(22) Date of filing: 17.06.1993
(51) Int. Cl.: C08J 9/32, B29C 67/20, C08L 23/00

(54) **Polyolefin/filler composite materials and their use**
Polyolefine/Füllstoff-Verbundwerkstoff und ihre Verwendung
Matériaux composites polyoléfine/charge et leur utilisation

(30) Priority: 19.06.1992 EP 92305671
(43) Date of publication of application: 22.12.1993
(73) Proprietor: SHELL INTERNATIONALE RESEARCH MAATSCHAPPIJ B.V., 2596 HR Den Haag (NL)
(72) Inventor: Curzon, Alan David, Barnton, Northwich (GB); White, Ronald George, Summerfields, Wilmslow (GB); Jones, Aidan Philip Rupert, Northenden, Manchester (GB)

(56) References cited:
- EP-A- 0 133 909
- EP-A- 0 473 215

## Description

This invention relates to polyolefin/filler composite materials in which the filler comprises hollow microspheres. Such materials are known as polyolefin "syntactic foams". The invention relates to the use of such materials in thermal insulation, and in particular the insulation of both rigid and flexible flowlines, e.g. for use underwater.

There are particularly onerous requirements on an insulating material for an underwater flowline. A material containing microspheres should be resistant to their breakage during the preparation of the material and subsequent application to a pipe; it should also permit substantial tensile elongation, exhibit low creep over a long period, perhaps a service life of 30 years, during which hot oil may be conveyed within the flowline, and have excellent mechanical properties.

Polyolefin/filler composite materials in which the filler comprises "glass bubbles" are described in Research Disclosure 253015. This article discloses that it is possible to compound "glass bubbles" with inter alia polypropylene using extrusion equipment, with less than 5% by weight breakage, to produce low-density composite materials. Proposed uses thereof are extruded parts for buoyancy and thermal insulation and large automotive mouldings.

When it was attempted, during experimentation, to incorporate microspheres into a polyolefin to make a composite material having properties suitable for rigorous applications such as flowline insulation, it was found to be possible to do so adequately only using base polypropylenes of high Melt Flow Index (MFI). The resultant composite materials generally had MFI values which were too high for application by the "pipe extrusion" method and/or had unsuitable mechanical properties for flowline insulation. When it was attempted to incorporate microspheres in a base polypropylene of low MFI, a substantial proportion of the microspheres were broken during the compounding or subsequent extrusion, so that the insulation properties were inadequate.

EP-A-0473215 discloses a solution to these problems, in order to obtain a composite material which can be employed in rigorous application areas, for example as an insulating casing for an underwater flowline that can be applied by coextrusion with a pipe. The solution comprises treating at least some of the microspheres to be incorporated in the polyolefin with a chain-scission agent; distributing the microspheres evenly in the polyolefin in its melt phase; and forming the composite material into a desired shape and cooling.

EP-A-0473215 includes specific examples of test pieces that are satisfactory for pipe extrusions, although no such extrusions are exemplified. EP-A-0473215 also suggests that the composite material can be extruded in the form of tapes and applied by "side-wrapping" to a steel pipe as that rotates.

During fabrication of an insulated flexible flowline, the insulation material which is applied in a tape form experiences severe tensile forces. To adequately meet these forces, dependent on the pipe diameter and tape dimensions, elongation at break of 1 to 40% or more is needed. Further, the surface of the tape should not have any notches or defects as these cause the tape to break during winding. Further, the tape needs to be manufactured in continuous lengths of several km.

In addition, during service of an insulated flowline, the insulation material should have an adequate thermal conductivity which may be derived from the presence of intact hollow glass microspheres. It is imperative that both during the manufacture of the syntactic foam tape and during the fabrication of the insulated flowline the microspheres do not break.

Further, as indicated above, the insulation material should maintain the insulating properties during the service life (10 to 30 years) by withstanding high hydrostatic compression and creep.

It is known from polypropylene extrusion that, to obtain a smoother surface finish, die temperatures higher than normal (210°C) and longer land length are needed (i.e. relatively high ratio of die land length 1 to die thickness t.). Higher temperatures should also minimise microsphere breakage. However, when this conventional wisdom was applied to materials of the type described above, tapes and melts of unacceptable shark-skin effect resulted. The shark-skin effect is less relevant when using the pipe extrusion technique (as is also flexibility), and will anyway usually be covered by an outer plastics layer (produced by coextrusion).

Surprisngly, it has now been found that reducing the die ratio l:t below 7:1 will enable polyolefin/microsphere composites to be extruded into tapes or sheets with a substantially smooth surface. Accordingly, the present invention provides a process for producing a smooth-surfaced tape or sheet from a composite material of polyolefin and hollow microsphere filler by extrusion through a die, characterised in that that die has a land length to thickness (l:t) ratio less than 7:1, preferably at most 5:1. Also contrary to normal practice, it has been found that increasing the extrusion temperature worsens the surface-finish, whereas reduction of that temperature facilitates the production of a substantially smooth surface, free from shark-skin. Hence, it is preferred that the extrusion temperature should be at most 215°C. Additionally, the production of a smooth surface can be facilitated by increasing the back-pressure in the extrusion, suitably by modification of the die profile.

It has also been found that, unexpectedly, under such processing conditions, chemical foaming agents can be introduced during melt processing, to give a desired foamed syntactic foam tape or sheet product. The foaming agent may be conventional, e.g. a CO₂- or N₂-releaser; many are known in the art. The density of the product may thus be reduced to 0.3 g/cm³ or below. The unfoamed product may have a minimum density of, say, 0.6 g/cm³. The maximum density of the product is, for example, 0.9 g/cm³.

The density of the novel product is one of the parameters determining its thermal conductivity. Another is the filler content, particularly the hollow microspheres.

The filler may comprise hollow microspheres substantially alone, or in combination with other filler materials, including non-hollow filler materials, for example talc, chalk, barium carbonate or chopped glass fibres. Preferably, however, the filler substantially consists of hollow microspheres (although in interpreting this statement it should be noted that any given sample of microspheres may contain a minor proportion of broken or solid microspheres).

It should also be noted that the term "microspheres", the accepted term of art for the filler materials in question, is not a term of geometrical precision. The majority of the microspheres may or may not be truly spherical.

The microspheres may be mixed with the polyolefin in particulate form and the material heated, to melt the polyolefin. Preferably, however, the microspheres are added to the polyolefin in its melt phase.

Preferably, the microspheres are present in the composite material in an amount of from 5 to 70%, more preferably 30 to 60%, by volume, with respect to the volume of the composite material.

Microspheres may be made of various plastics and inorganic materials. A preferred material is an inorganic glass, preferably a silica-based glass. A particular preferred material may comprise a major proportion of silica and minor proportions of an alkali metal oxide and B₂O₃.

The bulk density of the microspheres may suitably be in the range 0.07 to 0.6 g/ml, preferably 0.3 to 0.5 g/ml. The diameter of the microspheres is typically 10 to 200 µm, preferably 20 to 130 µm. Their isostatic compressive strength may be 1000 to 2500 psi (6.9 x 10⁶ Pa - 1.03 x 10⁸ Pa), preferably 2000 to 15000 psi (3.4 x 10⁷ Pa - 1.03 x 10⁸ Pa).

The polypropylene, polybutylene or other polyolefin used in this invention may be a homo- or co-polymer. Suitable copolymers are those comprising from 5 to 20 wt% of ethylene as comonomer. The polyolefin may be employed in the form of a blend with one or more other polymers, such blends then comprising 1 to 50, preferably 10 to 40, wt% of other polymers such as polyamides and thermoplastic elastomers, e.g. those sold under the Trade Mark KRATON, and EPDM rubbers.

A preferred polyolefin for use in the present invention is based on polypropylene. A polybutylene materials, when employed, is preferably based on 1-butene.

Suitably, the MFI of base polymers (whether homo-, co- or terpolymers) may be in the range 2 to 60, preferably 2 to 20, most preferably 3 to 10, g.10 min⁻¹ (per ISO 1133).

The polyolefin desirably contains an antioxidant. It is also preferred to include a lubricant such as calcium stearate.

The composite material may be provided as tapes or, preferably, pellets, for use in a later extrusion process. Alternatively, a sheet of the composite material may be produced, for use in a later compression moulding or thermoforming process.

A sheet or tape of the invention is, for example, 1 to 10 mm thick. a tape may be 10 to 100 mm wide. The length is unlimited; lengths of 5 km or more can be produced.

The composite material may be suitable for use as a flowline insulation composition. One method of forming a flowline insulation comprises extruding the composite materials as a tape onto a steel pipe, by side-wrapping. For this purpose, a product of the invention should have sufficient flexibility that it can be satisfactorily wound around a pipe which is, say, 100 mm in diameter. If desired, the contact between the composite material and the steel pipe may be improved by means of a carboxylated polyolefin layer therebetween.

Alternatively, an insulated flowline may be prepared by wrapping it with the composite material as a melt. In this case, the material may be in the form of a band up to 1000 mm wide and 10 mm thick. Perhaps the most important parameters of the melt are its melt strength and melt elongation. Its melt strength at 220°C is preferably 5 to 20 kPa. Its melt elongation is preferably 200 to 700%

The following examples (conducted using materials comprising polypropylene and glass microspheres, available as "CARIZITE"), illustrate the invention.

### Example 1

### Die Area

Extrusions were conducted on a polypropylene syntactic foam material, containing 25% m of microspheres and the appropriate heat stabilisation system, at various temperature using a Cincinnati-Milacron A2/80 extruder with counter rotating, parallel screws. The results shown in table 1 show that when using a die of cross sectional area 250 mm² and melt temperature from 176 to 182°C the surface finish of the resultant tape was rated as Poor. Halving the cross-sectional area of the die to 125 mm², and processing at similar melt temperatures, resulted in producing a tape with a smooth surface and a "Good" rating. This would appear to be valid for materials of MFI from 2 to 5 and for dies with die ratios (land length l to die thickness t) from 26:1 to 4:1 (the actual land lengths being from 75 to 15 mm).

### Example 2

### Processing temperature

Extrusions were conducted on a polypropylene syntactic foam material, containing 20%m of microspheres, at various temperatures using a Baker Perkins MP 2030 twin-screw co-rotating, compounding extruder. The results in table 2 show an optimum "processing window", in this case 215°C, in which a surface finish rated as "Good" was combined with a high tensile strength and elongation at break. For those at temperatures tested above and below 215°C, the surface finish and tensile properties deteriorated. In all of these tests, the die cross-sectional area was 250 mm², and the die land length ratio (l:t) was 5:1.

### Example 3

### Die land length

Using a Cincinnati-Milacron A2/80 extruder with counter rotating twin parallel screws and a syntactic foam material containing 25% of microspheres within polypropylene of Melt Flow Index 2.7, experiments were carried out with 3 exrusion dies, each having a cross-sectional area of 250 mm² but with land length ratios varying from 20:1 to 2:1. The results in Table 3 show that, at a mass temperature of 176°C the dies of higher ratios (longer die land length) produced tape with a "Poor" surface finish. At a ratio of 2:1 the finish improved to "Fair/good" rating.

**TABLE 1.**

| INFLUENCE OF DIE X-SECTIONAL AREA ON SURFACE FINISH. | | | | |
|---|---|---|---|---|
| SURFACE FINISH. | X-SECTION mm.2 | M.F.I. g.10min⁻¹ | TEMP. deg.C. | DIE RATIO. l:t |
| Poor | 250 | 3.2 | 176 | 20:1 |
| Poor | 250 | 3.2 | 182 | 20:1 |
| Poor | 250 | 2.2 | 183 | 20:1 |
| Good | 125 | 4.8 | 181 | 26:1 |
| Good | 125 | 2.1 | 181 | 26:1 |
| Good | 125 | 4.8 | 174 | 4:1 |
| Good | 125 | 2.1 | 177 | 4:1 |

**TABLE 2.**

| EFFECT OF PROCESSING TEMPERATURE ON TAPE PROPERTIES. | | | | |
|---|---|---|---|---|
| SURFACE FINISH | TEMP. Deg.C. | M.F.I. g.10 min⁻¹ | TENSILE STRENGTH(MPa) | ELONGATION AT BREAK.(%) |
| Poor | 200 | 3.0 | 11.3 | 90 |
| Good | 215 | 3.2 | 12.7 | 115 |
| Poor | 230 | 3.4 | 12.6 | 95 |
| Poor | 245 | 2.8 | 11.1 | 85 |
| Poor | 260 | 2.9 | 11.7 | 65 |

**TABLE 3.**

| EFFECT OF DIE LAND LENGTH ON SURFACE FINISH. | | | |
|---|---|---|---|
| SURFACE FINISH | TEMP Deg.C. | M.F.I. g.10min⁻¹ | DIE RATIO l:t |
| Poor | 176 | 2.7 | 20:1 |
| Poor | 176 | 2.7 | 7:1 |
| Fair/Good | 176 | 2.7 | 2:1 |

## Claims

1. Process for producing a smooth-surfaced tape or sheet from a composite material of polyolefin and hollow microsphere filler by extrusion through a die,
characterised in that the die has a land length to thickness (l:t) ratio less than 7:1.

2. Process as claimed in claim 1, wherein the die ratio 1:t is at most 5:1.

3. Process as claimed in claim 1 or 2, wherein the extrusion temperature is at most 215 °C.

4. Process as claimed in claim 1, 2 or 3, wherein the die thickness is from 1 to 10 mm and the die width is from 10 to 100 mm.

5. Process as claimed in claim 4, wherein the cross-sectional area is 250 mm².

6. Process as claimed in any one of the preceding claims, wherein the polyolefin is polypropylene and the microspheres are of an inorganic glass.

7. Tape or sheet of composite material, having a substantially smooth surface, produced by a process as claimed in any one of the preceding claims.

8. Method of insulating a pipe, which comprises wrapping the pipe with a tape of composite material as claimed in claim 7.

9. Method as claimed in claim 8, wherein the tape is extruded directly onto the pipe.

10. Method as claimed in claim 8, wherein the tape of composite material as claimed in claim 7 is softened by heat and then wrapped around the pipe.

## Patentansprüche

1. Verfahren zur Herstellung eines Bands oder einer Folie mit glatter Oberfläche aus einem Verbundwerkstoff aus Polyolefin und Mikrohohlkugeln als Füllstoff durch Extrusion durch eine Düse, dadurch gekennzeichnet, daß die Düse ein Verhältnis von Führungskanallänge zu Spalthöhe (l:h) von unter 7:1 aufweist.

2. Verfahren nach Anspruch 1, bei dem das Düsenverhältnis l:h höchstens 5:1 beträgt.

3. Verfahren nach Anspruch 1 oder 2, bei dem die Extrusionstemperatur höchstens 215°C beträgt.

4. Verfahren nach Anspruch 1, 2 oder 3, bei dem die Düsenspalthöhe 1 bis 10 mm und die Düsenbreite 10 bis 100 mm beträgt.

5. Verfahren nach Anspruch 4, bei dem die Querschnittsfläche 250 cm² beträgt.

6. Verfahren nach einem der vorhergehenden Ansprüche, bei dem man als Polyolefin Polypropylen und Mikrokugeln aus einem anorganischen Glas einsetzt.

7. Band oder Folie aus Verbundwerkstoff mit einer im wesentlichen glatten Oberfläche, hergestellt nach einem Verfahren gemäß einem der vorhergehenden Ansprüche.

8. Verfahren zur Isolation eines Rohrs, bei dem man das Rohr mit einem Band aus Verbundwerkstoff gemäß Anspruch 7 umwickelt.

9. Verfahren nach Anspruch 8, bei dem man das Band direkt auf das Rohr aufextrudiert.

10. Verfahren nach Anspruch 8, bei dem man das Band aus Verbundwerkstoff gemäß Anspruch 7 durch Wärmeeinwirkung aufweicht und dann um das Rohr wickelt.

## Revendications

1. Procédé de production d'une feuille ou d'un ruban à surface lisse à partir d'un matériau composite de polyoléfine et d'une charge de microsphères creuses par extrusion à travers une filière, caractérisé en ce que la filière possède un rapport de la longueur de la lèvre à l'épaisseur (l:t) inférieur à 7:1.

2. Procédé suivant la revendication 1, caractérisé en ce que le rapport de filière l:t est d'au maximum 5:1.

3. Procédé suivant la revendication 1 ou 2, caractérisé en ce que la température d'extrusion est d'au maximum 215°C.

4. Procédé suivant la revendication 1, 2 ou 3, caractérisé en ce que l'épaisseur de la filière varie de 1 à 10 mm et la largeur de la filière varie de 10 à 100 mm.

5. Procédé suivant la revendication 4, caractérisé en ce que la section transversale est de 250 cm².

6. Procédé suivant l'une quelconque des revendications précédentes, caractérisé en ce que la polyoléfine est le polypropylène et les microsphères sont constituées d'un verre inorganique.

7. Ruban ou feuille d'un matériau composite, possédant une surface sensiblement lisse, que l'on obtient par mise en oeuvre du procédé suivant l'une quelconque des revendications précédentes.

8. Méthode d'isolation d'un tuyau ou d'une conduite, caractérisée en ce que l'on enveloppe ce tuyau ou cette conduite d'un ruban en un matériau composite suivant la revendication 7.

9. Méthode suivant la revendication 8, caractérisée en ce que le ruban est directement extrudé sur la conduite ou le tuyau.

10. Méthode suivant la revendication 8, caractérisée en ce que l'on ramollit le ruban de matériau composite suivant la revendication 7 par de la chaleur et on l'enroule autour du tuyau ou de la conduite.
